# EUROPÄISCHE PATENTSCHRIFT

(11) **EP 1 075 163 B1**
(45) Veröffentlichungstag und Bekanntmachung des Hinweises auf die Patenterteilung: **21.07.2004**
(21) Anmeldenummer: 00112420.5
(22) Anmeldetag: 09.06.2000
(51) Int. Cl.: H04Q 11/04

(54) **Integrierte Schaltung für einen ISDN-Terminaladapter**
Integrated circuit for an ISDN terminal adapter
Circuit intégré pour un adaptateur de terminal RNIS

(30) Priorität: 11.06.1999 DE 19926609
(43) Veröffentlichungstag der Anmeldung: 07.02.2001
(73) Patentinhaber: Gude, Michael, Dr., 50668 Köln (DE)
(72) Erfinder: Gude, Michael, Dr., 50668 Köln (DE)

(56) Entgegenhaltungen:
- WO-A-01/47317
- DE-U- 29 910 195
- LEHMANN H: "KOSTENGÜNSTIGER ISDN-TERMINAL-ADAPTER FÜR PCS" ELEKTRONIK, Bd. 48, Nr. 1, 12. Januar 1999 (1999-01-12), Seiten 66-73, XP000880738 ISSN: 0013-5658

## Beschreibung

Die Erfindung befasst sich mit einer integrierten Schaltung, die alle wesentlichen Teile eines ISDN-Terminaladapters zum Anschluss über den USB (Universal Serial Bus) auf einem Chip integriert.

Nach dem Stand der Technik sind ISDN-Terminaladapter bekannt, die mit einer seriellen Schnittstelle ausgerüstet sind. Diese verbinden das öffentliche ISDN-Netzwerk mit einem Computer und ermöglichen verschiedenen Dienste mit dem Computer über das ISDN-Netzwerk abzuwickeln; z.B. Internetzugang, FAX, File-Transfer.

Ferner sind USB-Peripheriegeräte bekannt, die es ermöglichen, verschiedenartige Peripherie über den USB mit einem Computer zu verbinden.

In jüngster Zeit sind auch ISDN-Terminaladapter bekannt geworden, die über eine USB-Schnittstelle verfügen.

Eine solche Ausführung nach dem Stand der Technik wird beschrieben in: LEHMANN, H.: "Kostengünstiger ISDN-Terminal-Adapter für PCs", Elektronik, Bd. 48, Nr. 1, 12. Januar 1999 (1999-01-12), Seiten 66-73, XP000880738 ISSN: 0013-5658.

Diese Druckschrift beschreibt einen USB-ISDN-Terminaladapter mit einem Microcontroller als notwendige steuernde Einheit.

Wesentlicher Bestandteil des dort beschriebenen und aller bislang bekannter ISDN-Terminaladapter, insbesonderer derjenigen mit USB-Schnittstelle ist das Vorhandensein eines Mikroprozessors oder Mikrocontrollers, der für den Datentransfer sorgt und in der Regel auch für die Ausführung des ISDN-D-Kanalprotokolls verantwortlich ist. Die Aufgabe der vorliegenden Erfindung ist es nun, einen Terminaladapter-Chip zu entwickeln, der mit einem Minimum an Aufwand alle notwendigen Funktionen realisiert.

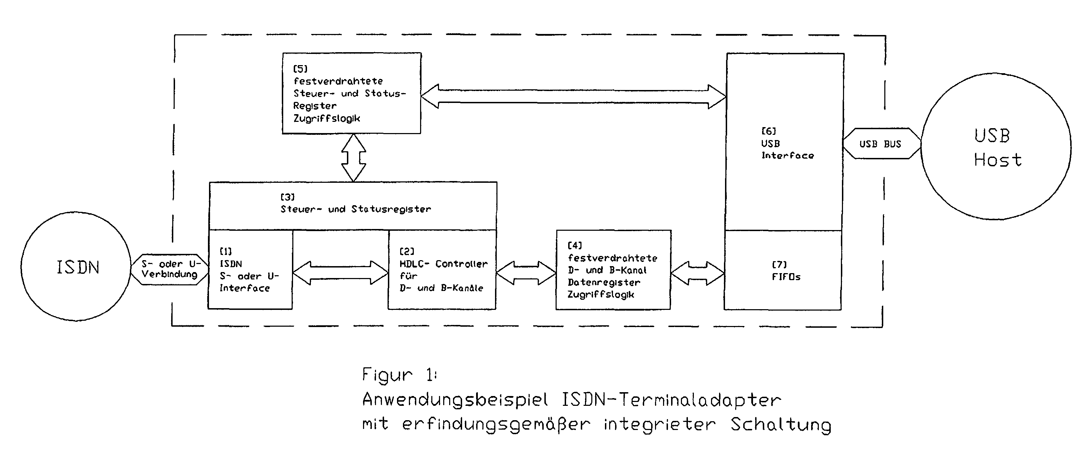

Figur 1 zeigt ein Anwendungsbeispiel des ISDN-Terminaladapters.

Die Aufgabe wird erfindungsgemäß dadurch gelöst, dass ein USB-Interface 6 (Universal Serial Bus) und ein ISDN-U- oder ISDN-S-Interface 1 monolitisch auf einem Chip integriert sind und die Datenübertragung zwischen ISDN-Interface und USB durch eine festverdrahtete Logik 5, also ohne programmierbaren Prozessor, derart erfolgt, dass D- und B-Kanal-Datenregister des ISDN-Interfaces 4 über FIFOs 7 des USB-Interfaces über USB-Pipes kommunizieren. Die Register des ISDN-Interfaces 3 sind ebenfalls über festverdrahtete Logik mit dem USB-Interface verbunden und kommunizieren über USB-Pipes mit dem Host.

Hierbei wird als ein wesentlicher Teil der Mikrocontroller völlig eingespart. Ferner ist der Einsatz der integrierten Schaltung ohne Erstellung eines Programmcodes für den Terminaladapter möglich. Demgegenüber wird der Aufwand für die auf dem Host-Computer ablaufende Software nicht wesentlich erhöht.

Die Erfindung ersetzt den sonst notwendigen programmierbaren Prozessor durch eine einfache festverdrahtete Logik, die die D- und B-Kanal-Daten zwischen dem ISDN-Schaltungsteil und den FIFOs des USB-Interfaces übertragen. Diese Daten werden dann über den USB zwischen Host Computer und USB-Interface ausgetauscht.

Da einer Steuerungsmöglichkeit des ISDN-Teils mangels Mikrocontroller nicht mehr möglich ist, werden erfindungsgemäss die Steuer- und Statusregister des ISDN-Teils über eine zusätzliche Pipe mit dem Host-Computer verbunden. Die Datenübertragung wird wiederum über eine festverdrahtete Logik vorgenommen. Aufgrund der geringen Anforderungen an den Echtzeitbetrieb der Registereinstellungen, ist die Steuerung des ISDN-Teils über USB-Pipes möglich.

Anspruch 2. ergänzt die erfindungsgemäße Schaltung um HDLC-Controller 2. Hierbei ist es sinnvoll die zumindest für den D-Kanal unbedingt notwendige HDLC-Generierung direkt auf dem Chip zu machen, da der zusätzliche Schaltungsaufwand begrenzt ist; die Realisierung des HDLC-Protokolls auf dem Host Computer erfordert eine nicht unerheblichen Rechenaufwand.

Anspruch 3.: Ebenfalls aus Kostenründen ist es sinnvoll, die über das reine HDLC-Protokoll hinausgehenden D- und B-Kanalprotokolle auf dem Host Computer ablaufen zu lassen. Eine Realisierung auf dem Chip würde die benötigte Schaltungskomplexität unnötig erhöhen.

Anspruch 4.: Für eine sinnvolle funktionelle Interoperation des Terminaladapters mit dem Host Computer ist ein Aufwecken des USB und u.U. des ganzen Host Computers sinnvoll, wenn ein Anruf über das ISDN-Interface signalisiert wird. Da der TA mangels integriertrm Mikrocontroller das D-Kanalprotokoll schwerlich selbst auswerten kann, wird die Aufweckbedingung durch einen Statuswechsel des ISDN-Interfaces initiiert.

Anspruch 5.: Die Versorgungsspannung, die aus dem USB-Bus zu beziehen ist, schwankt aufgrund von unterschiedlichem Spannungsabfall an Kabeln und HUBs. Ferner kann die Spannung durch das Zustecken oder Trennen von Geräten vom Bus sprunghaft schwanken. Die unterste durch die USB-Spezifikation definierte Versorgungsspannung beträgt 4,4 Volt. Da diese kleiner als die üblicherweise verwendeten 5Volt +/- 10% sind, ist der Einsatz einfacher 5 Volt Chips nicht sinnvoll. Durch Versorgung der gesamten Schaltung über einen Spannungsregler von 3.3 V werden Spannungsschwankungen verhindert, ferner kann die Schaltung in einer 3.3 Volt Chip-Technologie relisiert werden, was die Chipgröße wiederum reduziert.

Anspruch 6.: Zusätzlich zu der reinen Datenübertragung ist bei TAs auch oft die Analogfähigkeit gewünscht. Dabei kann das CODEC entweder die Daten direkt aus dem ISDN-Interface übernehmen. Bei der erfindungsgemäßen Schaltung ist über einen Umschalter auch der Betrieb über USB-Pipes vom Host Computer möglich. Dieses lässt auch eine einfache Realisierung einer externen "Soundkarte" über USB zu.

Anspruch 7.: Sollen zusätzliche Geräte an den TA angeschlossen werden, können auch zusätzliche Schnittstellen realisiert werden, ohne dass es eines Mikrocontrollers bedarf.

Hierbei werden die Daten wieder über festverdrahtete Schaltungsteile in USB-Pipes kopiert. Der Datentransfer und der Zugriff auf eventuell vorhandene Register wird duch den Host Computer gesteuert.

## Patentansprüche

1. Integrierte Schaltung für einen ISDN-Terminaladapter, **dadurch gekennzeichnet, dass**
ein Universal Serial Bus USB-Interface und ein ISDN-U- oder ISDN-S-Interface monolitisch auf einem Chip integriert sind und die Datenübertragung zwischen ISDN-Interface und USB-Interface durch eine festverdrahtete Logik [4], also ohne programmierbaren Prozessor, derart erfolgt, dass D- und B-Kanal-Datenregister des ISDN-Interfaces über FIFOs [7] des USB-Interfaces über USB-Pipes kommunizieren, und dadurch dass Steuer- und Statusregister [3] des ISDN-Interfaces ebenfalls über eine festverdrahtete Logik [5] mit dem USB-Interface [6] verbunden sind und über USB-Pipes mit einem Host-Computer kommunizieren.

2. Integrierte Schaltung nach Anspruch 1, **dadurch gekennzeichnet, dass**
zwischen den D- und B-Kanal-Datenregistern des ISDN-Interfaces und den FIFOs des USB-Interfaces HDLC-Controller [2] liegen.

3. Integrierte Schaltung nach Anspruch 1, **dadurch gekennzeichnet, dass**
D- und B-Kanalprotokolle auf dem Host-Computer ablaufen, wenn die integrierte Schaltung in einem USB-Terminaladapter eingesetzt wird.

4. Integrierte Schaltung nach Anspruch 1, **dadurch gekennzeichnet, dass**
bei einem Status-Wechsel auf dem ISDN-S- oder ISDN-U-Interface der USB fernaufgeweckt wird.

5. Integrierte Schaltung nach Anspruch 1, **dadurch gekennzeichnet, dass**
die Schaltung über einen 3.3 Volt Spannungsregler direkt aus der USB-Versorgungsspannung versorgt wird.

6. Integrierte Schaltung nach Anspruch 1, **dadurch gekennzeichnet, dass**
zusätzlich ein CODEC integriert ist, welches entweder direkt die Daten aus dem ISDN-Interface bezieht oder ebenfalls über USB-Pipes mit dem Host-Computer verbunden ist.

7. Integrierte Schaltung nach Anspruch 1, **dadurch gekennzeichnet, dass**
eine weitere parallele oder serielle Schnittstelle zum Anschluß zusätzlicher Peripherie vorhanden ist, wobei diese Schnittstelle mindestens über eine USB-Pipe mit dem Host-Computer verbunden ist und dass für den Datentransfer zu dieser Schnittstelle ebenfalls eine festverdrahtete Logik verwendet wird.

## Claims

1. An integrated circuit for an ISDN terminal adapter,
**characterized in that** a universal serial bus interface (USB interface) and an ISDN-U or ISDN-S interface are integrated monolithically on one chip and the data transmission between ISDN interface and USB interface is performed by a hardwired logic [4], i.e., without a programmable processor, in such a way that D and B channel data registers of the ISDN interface communicate via FIFOs [7] of the USB interface via USB pipes, and the control and status registers [3] of the ISDN interface are thus also connected via a hardwired logic [5] to the USB interface [6] and communicate with a host computer via USB pipes.

2. The integrated circuit according to Claim 1,
**characterized in that** there are HDLC controllers [2] between the D and B channel data registers of the ISDN interface and the FIFOs of the USB interface.

3. The integrated circuit according to Claim 1,
**characterized in that** D and B channel protocols are executed on the host computer when the integrated circuit is used in a USB terminal adapter.

4. The integrated circuit according to Claim 1,
**characterized in that** in the event of a status change on the ISDN-S or ISDN-U interface, the USB is awakened remotely.

5. The integrated circuit according to Claim 1,
**characterized in that** the circuit is supplied directly from the USB supply voltage via a 3.3 V voltage regulator.

6. The integrated circuit according to Claim 1,
**characterized in that** a codec, which either draws the data directly from the ISDN interface or is also connected to the host computer via USB pipes, is additionally integrated.

7. The integrated circuit according to Claim 1,
**characterized in that** there is a further parallel or serial interface for connecting additional peripherals, this interface being connected to the host computer at least via a USB pipe, and a hardwired logic is also used for the data transfer to this interface.

## Revendications

1. Circuit intégré pour un adaptateur de terminale RNIS, **caractérisé en ce que**
une interface Universal-Serial-Bus (interface USB) et une interface RNIS-U ou RNIS-S sont intégrées de façon monolithe sur une puce et la transmission de données entre l'interface RNIS et l'interface USB s'effectue par une logique [4] câblée à demeure, donc sans processeur programmable, de telle sorte que les registres de données de canal D et B de l'interface RNIS communiquent au moyen de FIFOs [7] de l'interface USB via des USB-Pipes, et que de ce fait les registres de commande et d'état [3] de l'interface RNIS sont reliés également au moyen d'une logique [5] câblée à demeure à l'interface USB [6] et communiquent au moyen de USB-Pipes avec un ordinateur hôte.

2. Circuit intégré selon la revendication 1, **caractérisé en ce que**
on a des contrôleurs HDLC [2] entre les registres de données de canal D et de canal B de l'interface RNIS et les FIFOs de l'interface USB.

3. Circuit intégré selon la revendication 1, **caractérisé en ce que**
les protocoles de canal D et B se déroulent sur l'ordinateur hôte si le circuit intégré est utilisé dans un adaptateur de terminal USB.

4. Circuit intégré selon la revendication 1, **caractérisé en ce que**
le USB est actionné à distance dans le cas d'un changement d'état sur l'interface RNIS-S ou l'interface RNIS-U.

5. Circuit intégré selon la revendication 1, **caractérisé en ce que**
le circuit est alimenté au moyen d'un régulateur de tension 3,3 V directement à partir de la tension d'alimentation USB.

6. Circuit intégré selon la revendication 1, **caractérisé en ce que**,
un CODEC, qui apporte directement les données de l'interface RNIS ou/est relié également par des USB-Pipes à l'ordinateur hôte, est intégré en supplément.

7. Circuit intégré selon la revendication 1, **caractérisé en ce que**
une autre interface parallèle ou série présente pour le raccordement de périphériques supplémentaires, cette interface étant reliée au moins par une USB-Pipe à l'ordinateur hôte et **en ce qu'**on utilise également une logique câblée à demeure pour le transfert de données à cette interface.
